# EUROPÄISCHE PATENTSCHRIFT

(11) **EP 3 405 035 B1**
(45) Veröffentlichungstag und Bekanntmachung des Hinweises auf die Patenterteilung: **07.06.2023**
(21) Anmeldenummer: 17700301.9
(22) Anmeldetag: 19.01.2017
(51) Int. Cl.: A01N 63/00, C05F 11/08, C05G 3/00, C11D 1/66, C11D 3/38, C11D 3/48, C11D 11/00, C11D 3/382, C11D 3/00

(54) **REINIGUNGSMITTEL UMFASSEND SAPONIN UND MILCHSÄUREBAKTERIEN**
CLEANING AGENT COMPRISING SAPONIN AND LACTIC ACID BACTERIA
PRODUIT DE NETTOYAGE COMPRENANT DE LA SAPONINE ET DES BACTERIES DE FERMENTATION LACTIQUE

(30) Priorität: 19.01.2016 EP 16151921
(43) Veröffentlichungstag der Anmeldung: 28.11.2018
(73) Patentinhaber: Schweighofer, Thomas Josef, 8223 Vockenberg (AT)
(72) Erfinder: Schweighofer, Thomas Josef, 8223 Vockenberg (AT)
(74) Vertreter: SONN Patentanwälte OG
(86) Internationale Anmeldenummer: PCT/EP2017/051032
(87) Internationale Veröffentlichungsnummer: WO 2017/125464

(56) Entgegenhaltungen:
- EP-A1- 2 770 043
- DATABASE WPI Week 201319 Thomson Scientific, London, GB; AN 2012-R48737 XP002759135, & CN 102 719 491 A (UNIV BEIJING FORESTRY) 10. Oktober 2012 (2012-10-10) in der Anmeldung erwähnt
- DATABASE WPI Week 201503 Thomson Scientific, London, GB; AN 2015-00932E XP002759136, & CN 104 087 645 A (UNIV JILIN AGRIC) 8. Oktober 2014 (2014-10-08) in der Anmeldung erwähnt
- DATABASE WPI Week 201315 Thomson Scientific, London, GB; AN 2012-P47781 XP002759137, & KR 2012 0116053 A (SANG J L) 22. Oktober 2012 (2012-10-22) in der Anmeldung erwähnt
- DATABASE WPI Week 201433 Thomson Scientific, London, GB; AN 2014-J77058 XP002759138, & CN 103 664 348 A (FUNAN JIANSHENGYUAN EDIBLE MUSHROOMS DEV CO LTD) 26. März 2014 (2014-03-26) in der Anmeldung erwähnt
- DATABASE WPI Week 200957 Thomson Scientific, London, GB; AN 2009-M71399 XP002759139, & KR 2009 0083505 A (BIOLAND LTD) 4. August 2009 (2009-08-04) in der Anmeldung erwähnt
- N. MOYANE: "The physicochemical and sensory evaluation of commercial sour milk (amasi) products", AFRICAN JOURNAL OF FOOD SCIENCE, Bd. 7, Nr. 4, 30. April 2013 (2013-04-30), Seiten 56-62, XP055356535, DOI: 10.5897/AJFS12.089

## Beschreibung

Die Erfindung betrifft ein Reinigungsmittel aus natürlichen Bestandteilen, insbesondere zur Reinigung von harten Oberflächen. Ferner betrifft sie eine Verwendung und ein Herstellungsverfahren für ein solches Reinigungsmittel.

Unter Reinigungsmitteln (Synonym: Reiniger) werden vor allem Erzeugnisse verstanden, die zur Reinigung von Gegenständen aus Gewebe- und Fasermaterial wie auch von harten Oberflächen in Haushalt, Industrie oder Gewerbe dienen. Üblicherweise wird Reinigungsmittel als Konzentrat in flüssiger oder fester Form angeboten und dann vom Endverbraucher vor der Verwendung in Wasser verdünnt oder aufgelöst.

Übliche Reinigungsmittel enthalten Tenside und gegebenenfalls Säuren. Letzteres vor allem, wenn anorganische Rückstände, insbesondere Kalk, von Oberflächen entfernt werden sollen, wie dies beispielsweise bei Sanitärreinigern der Fall ist.

In der Vergangenheit haben sich auch Reinigungsmittel, die - unüblicherweise - lebende Mikroorganismen beinhalten, bewährt. Diese Mikroorganismen sind Nützlinge wie Milchsäurebakterien, welche sowohl den Abbau von Verschmutzungen fördern als auch, durch kompetitive Verdrängung und Produktion von antibakteriellen bzw. fungiziden Wirkstoffen, das Wachstum von schädlichen Mikroorganismen hemmen bzw. verhindern. Insbesondere wird das Wachstum von Fäkalbakterien der Familie der *Enterobacteriaceae* (mit Vertretern wie *Escherichia, Salmonella* und *Shigella*) gehemmt, die sowohl schlechte Gerüche verursachen als teilweise auch krankheitserregend sind.

So offenbart die DE 44 28 624 A1 Reinigungsmittel, die Milchsäurebakterien beinhalten. Reinigungsmittel mit Milchsäurebakterien erweisen sich als geruchshemmend, abbauend gegenüber pathogenen Keimen und fungizid.

Die WO 2004/106481 A2 betrifft eine Zusammensetzung, die Tenside und ausgewählte Milchsäurebakterienarten beinhaltet.

Die WO 2010/130541 A1 beschreibt einen Reiniger für harte Oberflächen, der Mikroorganismen zum Abbau anorganischer Anschmutzungen enthält. Milchsäurebakterien werden als Bestandteil des Reinigers vorgeschlagen.

Allerdings enthalten die im Stand der Technik bekannten Reiniger, welche nützliche Mikroorganismen umfassen, künstliche Tenside, die in der Nutzung oder Herstellung oftmals aggressiv gegenüber über Mensch und Umwelt bzw. unzureichend biologisch abbaubar sind.

Eine Aufgabe der vorliegenden Erfindung ist nun, ein Reinigungsmittel mit Milchsäurebakterien bereitzustellen, das eine verträglichere Alternative zu künstlichen Tensiden beinhaltet, sowie ein möglichst umweltschonendes Herstellungsverfahren für das Reinigungsmittel.

Daher betrifft die vorliegende Erfindung ein Reinigungsmittel, umfassend lebensfähige Milchsäurebakterien, mindestens ein Saponin und Wasser. Die Massenkonzentration aller Saponine im Reinigungsmittel beträgt mindestens 0,01%, bevorzugt mindestens 0,025%, mehr bevorzugt mindestens 0,05%, noch mehr bevorzugt mindestens 0,1%; vornehmlich beträgt die Massenkonzentration mindestens 0,25%, bevorzugt mindestens 0,5%, mehr bevorzugt mindestens 1%, noch mehr bevorzugt mindestens 1,5%, insbesondere mindestens 2%. Das Reinigungsmittel enthält an Milchsäurebakterien mindestens 1000 koloniebildene Einheiten (KBE) pro Milliliter. Der pH-Wert des Reinigungsmittels liegt unter 5. Vorzugsweise ist das Reinigungsmittel der Erfindung flüssig.

Das erfindungsgemäße Reinigungsmittel eignet sich hervorragend zur Entfernung von Anschmutzungen und/oder Rückständen und ist insbesondere ein Reinigungsmittel für harte Oberflächen wie z.B. Glas, Keramik, Metall, Stein, Holz, oder Kunststoff. Es kann auch zur Reinigung von saugfähigen oder nicht-saugfähigen, weichen Oberflächen eingesetzt werden, z.B. Pflanzenbestandteile wie Blätter. Behandelte Pflanzen sind vorzugsweise lebende Pflanzen.

Das erfindungsgemäße Reinigungsmittel bzw. Herstellungsverfahren ist besonders umweltschonend, weil es ohne Stoffe auskommen kann, die aus industriell geförderten fossilen Brennstoffen erzeugt werden, wie dies beispielsweise künstliche Tenside wären. Insbesondere das Zurückgreifen auf in vielen Ländern heimische Pflanzen bei der Herstellung, wie im Weiteren erwähnt, ermöglicht eine ausgeglichene ökologische Bilanz ohne unnötige Transportwege.

Außerdem wirkt das erfindungsgemäße Reinigungsmittel probiotisch. Unter Bewirkung eines probiotischen Effekts ist hierbei zu verstehen, dass die enthaltenen Milchsäurebakterien das Wachstum und/oder die Überlebensfähigkeit von auf den zu behandelnden Oberflächen oder Gegenständen vorhandenen unerwünschten, insbesondere pathogenen und/oder Biofilm bildenden Mikroorganismen, hemmen, vorzugsweise durch kompetitive Verdrängung der unerwünschten Mikroorganismen durch die im Reiniger enthaltenen Milchsäurebakterien und/oder aufgrund der Säureproduktion durch die im Reiniger enthaltenen Milchsäurebakterien. Insbesondere Fäkalbakterien der Familie der *Enterobacteriaceae* (beispielsweise mit Vertretern in den Gattungen *Escherichia, Salmonella* und *Shigella*) und krankheitserregende Pilze (beispielsweise mit Vertretern in den Gattungen *Candida* und *Aspergillus*) zählen zu diesen unerwünschten Mikroorganismen.

Aufgrund dieser probiotischen Wirkung ist es ebenfalls zweckmäßig, das Reinigungsmittel vorbeugend auf Oberflächen oder Gegenständen anzubringen, um die Ansiedelung von unerwünschten Mikroorganismen zu verhindern. Weiters ist das Reinigungsmittel bodenfreundlich und Pflanzen förderlich - deshalb kann es z.B. auch im Gartenbereich bedenkenlos angewendet werden.

Die gemäß der vorliegenden Erfindung vorhandenen Saponine verstärken - neben ihrer Wirkung als Tenside - die positiven Wirkungen, insbesondere die erwähnte probiotische Wirkung, noch. Insbesondere geschieht dies durch ein überraschendes Zusammenwirken der Saponine und der Milchsäurebakterien.

Zwar gibt es Dokumente im Stand der Technik, die Reinigungsmittel mit Saponinen bzw. Rohstoffe dafür offenbaren, jedoch überhaupt nicht erkannt haben, dass zusätzlich eine gewisse Konzentration an lebensfähigen Milchsäurebakterien förderlich ist:
Die EP 2 770 043 A1 bezieht sich auf ein Detergens, insbesondere Waschmittel, Reinigungsmittel oder Kosmetikum, enthaltend Waschnuss-Tensid und Molke bzw. ein während der Milchverarbeitung gewonnenes Permeat. In Absatz [0018] wird offenbart, dass Sauermolke (mit Milchsäurebakterien behandelte Milch) im Detergens verwendet werden kann, obwohl jedoch Süßmolke (für die nicht offenbart ist, dass sie Milchsäurebakterien beinhaltet) bevorzugt ist. Auch Permeat (aus dem 99,5% der Bakterien gefiltert werden, vgl. Absatz [0019)]) kann gemäß dem Dokument verwendet werden. Zuletzt wird eine Erhitzung des Detergens auf 60°C als vorteilhaft angesehen (vgl. Absatz [0038]) bzw. die Ausführungsbeispiele), welche natürlich für Milchsäurebakterien sehr schädlich ist (falls sie denn überhaupt im Detergens vorhanden sind). Zusammenfassend offenbart das Dokument weder die erfindungsgemäße Mindestkonzentration an Milchsäurebakterien im Reinigungsmittel noch erkennt es den Kern der vorliegenden Erfindung - die vorteilhafte Wirkung, die durch die Kombination von Saponinen und lebensfähigen Milchsäurebakterien im Reinigungsmittel erreicht wird.

Die englische Zusammenfassung (World Patent Index / Thomson) von CN 102 719 491 A betrifft einen Saponinextrakt der Waschnuss ("soap berry"), der erst enzymatisch und dann mit Milchsäurebakterien behandelt wird. Dieser Saponinextrakt kann für die Herstellung von Reinigungsmitteln verwendet werden. Zusammenfassend offenbart das Dokument jedoch weder die erfindungsgemäße Mindestkonzentration an Milchsäurebakterien noch den pH-Wert im Reinigungsmittel noch wird überhaupt erkannt, dass lebensfähige Milchsäurebakterien im Reinigungsmittel selbst vorhanden sein müssen.

Die englischen Zusammenfassungen (World Patent Index / Thomson) der Dokumente CN 104 087 645 A, KR 2012 0116053 A, CN 103 664 348 A und KR 2009 0083505 A beziehen sich auf die Fermentierung von Ginseng mit Milchsäurebakterien zu verschiedenen Zwecken (jedoch nicht zur Herstellung eines Reinigungsmittels). Die Merkmale der vorliegenden Erfindung werden in diesen Dokumenten weder offenbart noch nahegelegt.

Saponine sind Glycoside von Steroiden, Steroidalkaloiden oder Triterpenen. Sie sind natürliche Tenside mit meist bitterem Geschmack. Saponine sind in höheren Pflanzen weit verbreitet und dienen diesen als Defensivstoffe gegen Pilzbefall und Insektenfraß. Viele Saponine haben - neben der Tensidfunktion - viele vorteilhafte Wirkungen, unter anderem gegen schädliche Keime. Die Früchte der Rosskastanie (*Aesculus* sp., insbesondere *hippocastanum*)*,* das Rhizom des Seifenkrauts (*Saponaria* sp., insbesondere *officinalis*)*,* die Rinde des Seifenrindenbaumes (*Quillaja*), die Früchte ("Waschnuss") des Waschnussbaumes (*Sapindus* sp., insbesondere *saponaria*), die Blätter der Birke (*Betula*) und auch Bestandteile des Efeus (*Hedera* sp., insbesondere *helix*) weisen eine hohe Saponinkonzentration auf. Saponine aus den eben genannten Pflanzenbestandteilen oder Pflanzen (und artverwandten Pflanzen davon) sind besonders geeignet für die vorliegende Erfindung. Höchst bevorzugt als Saponine gemäß der vorliegenden Erfindung sind Aescine (Saponine aus der Rosskastanie), Saponine der Birke und Hederasaponine (Saponine aus dem Efeu). Die Struktur von Aescinen ist beispielsweise näher beschrieben in Sirtori, Cesare R. "Aescin: pharmacology, pharmacokinetics and therapeutic profile." Pharmacological Research 44.3 (2001): 183-193. Die Struktur von Hederasaponinen ist beispielsweise näher beschrieben in Elias, R., et al. "Triterpenoid saponins from the leaves of Hedera helix." Journal of natural products 54.1 (1991): 98-103.

In einer bevorzugten Ausführungsform der vorliegenden Erfindung enthält das Reinigungsmittel Saponine aus einer der im vorhergehenden Absatz genannten Pflanzen oder beliebige Mischungen davon, insbesondere Saponine aus saponin-haltigen Bestandteilen von Kastanie, Seifenkraut, Efeu, Birke oder Seifenrindenbaum, oder Mischungen davon. Vorzugsweise machen diese Saponine mindestens 25%, bevorzugt mindestens 50%, mehr bevorzugt mindestens 75%, noch mehr bevorzugt mindestens 90%, insbesondere mindestens 95% oder gar mindestens 99% der Masse aller im Reinigungsmittel enthaltenen Saponine aus.

Es kann von Vorteil sein, wenn die Massenkonzentration aller Saponine im flüssigen Reinigungsmittel den Wert von 5%, bevorzugt 4%, mehr bevorzugt 3%, insbesondere 2,5% nicht überschreitet, um beispielsweise zu starke Schaumbildung zu vermeiden.

Vorzugsweise, wenn das Reinigungsmittel als flüssiges Konzentrat erfindungsgemäß bereitgestellt ist, beträgt die Massenkonzentration aller Saponine im Reinigungsmittel mindestens 0,1%, bevorzugt mindestens 0,25%, mehr bevorzugt mindestens 0,5%, noch mehr bevorzugt mindestens 1%, insbesondere mindestens 1,5% oder gar mindestens 2%.

Vorzugsweise, wenn das Reinigungsmittel als flüssige Verdünnung erfindungsgemäß bereitgestellt ist, beträgt die Massenkonzentration aller Saponine im Reinigungsmittel mindestens 0,01%, bevorzugt mindestens 0,025%, mehr bevorzugt mindestens 0,05%, noch mehr bevorzugt mindestens 0,1%. In manchem bevorzugten Ausführungsformen der erfindungsgemäßen Verwendung oder Verwendungsverfahren ist es auch möglich, das Konzentrat des Reinigungsmittels oder das Reinigungsmittel als flüssige Verdünnung beispielsweise 1:2, 1:5, 1:10, 1:50, 1:100, 1:250, 1:500 oder 1:1000 zu verdünnen.

Unter Milchsäurebakterien versteht man Bakterien, die Milchsäure produzieren. Die Milchsäurebakterien im Sinne der vorliegenden Erfindung können zwar aus einer Reinkultur bestehen, üblicherweise bestehen sie aus einer Vielzahl von verschiedenen Arten. Bevorzugt sind diese ausgewählt aus Vertretern der Gattungen *Lactococcus und Leuconostoc* und Vertretern Familie der *Lactobacillicae* wie die Gattung *Lactobacillus.* Insbesondere bevorzugt sind diese ausgewählt aus Vertretern der Gattung *Lactobacillus* wie beispielsweise *Lactobacillus alimentarius, Lactobacillus farciminis, Lactobacillus plantarum, Lactobacillus casei, Lactobacillus acidophilus, Lactobacillus delbrueckii, Lactobacillus brevis, Lactobacillus var. lindneri, Lactobacillus buchneri, Lactobacillus fermentum* und *Lactobacillus fructivorans.*

Das erfindungsgemäße Reinigungsmittel enthält an Milchsäurebakterien mindestens 10³ KBE (KBE) pro Milliliter des Reinigungsmittels, bevorzugt mindestens 10⁴ KBE/ml, mehr bevorzugt mindestens 10⁵ KBE/ml, insbesondere mindestens 10⁶ KBE/ml oder gar mindestens 5×10⁶ KBE/ml. Besonders effektiv ist eine Konzentration an Milchsäurebakterien zwischen 10⁵ KBE/ml und 5×10⁶ KBE/ml.

Zwar offenbart die WO 2013/068468 A1 Stoffe zur Behandlung von Schlämmen und Aschen, insbesondere Klärschlamm, die sogenannte "effektive Mikroorganismen" und wenigstens eine desinfizierende und/oder geruchsneutralisierende Chemikalie beinhalten. Laut jenem Dokument können Milchsäurebakterien "effektive Mikroorganismen" sein. Weiters können laut jenem Dokument Saponine geruchsneutralisierende Chemikalien sein. Das erfindungsgemäße Reinigungsmittel, umfassend Milchsäurebakterien und Saponine, ist jedoch nicht unmittelbar und eindeutig offenbart. Außerdem versucht die Lehre der WO 2013/068468 A1 ein anderes Problem als das der vorliegenden Erfindung zu lösen.

Da das erfindungsgemäße Reinigungsmittel eine wässrige Phase aufweist, befinden sich die lebensfähigen Milchsäurebakterien üblicherweise teilweise oder vollständig in Suspension. Ebenso ist das Saponin üblicherweise vollständig in der wässrigen Phase des erfindungsgemäßen Reinigungsmittels gelöst.

Das erfindungsgemäße Reinigungsmittel kann weitere Inhaltsstoffe umfassen. Vorzugsweise umfasst es einen oder mehrere weitere in Reinigungsmitteln übliche Zusatzstoffe ausgewählt aus Salzen, Säuren, Parfüms, Filmbildnern, Verdickern, Lösungsmitteln, Buildern, Korrosionsinhibitoren, Komplexbildnern, Alkalien, Konservierungsmitteln, Bleichmitteln, Enzymen, Abrasivstoffen, wie beispielsweise in der WO 2010/130541 A1 offenbart. In einer bevorzugten Ausführungsform umfasst das Reinigungsmittel ein Enzym, ausgewählt aus Proteinasen, Amylasen, Cellulasen und Pentosanasen bzw. Mischungen davon. In einer weiteren bevorzugten Ausführungsform umfasst das Reinigungsmittel Vitamine, insbesondere Vitamin A und/oder E, bzw. weitere Antioxidantien.

Das erfindungsgemäße Reinigungsmittel weist einen pH-Wert von unter 5, bevorzugt unter 4, mehr bevorzugt unter 3,5 oder gar unter 3, insbesondere unter 2,75 oder gar unter 2,5. Dadurch wird zum einen die Haltbarkeit des Reinigungsmittels gesteigert und zum andere auch die Wirkung (vor allem in Bezug auf die Reinigungswirkung). Da das Reinigungsmittel lebensfähige Milchsäurebakterien beinhaltet, kann ein solcher sauer pH Wert dadurch erreicht werden, dass das Reinigungsmittel zur Fermentation geeignet ist (durch Vorsehung von Nährstoffen, usw.) oder durch Fermentation erhalten wurde. Das heißt, dass die Milchsäurebakterien (und andere möglicherweise vorhandene Mikroorganismen) das Reinigungsmittel durch die Verstoffwechslung von Nährstoffen ansäuern. Alternativ, oder zusätzlich dazu, kann das Reinigungsmittel durch Zugabe von Säure wie beispielsweise Zitronensäure angesäuert werden.

Daher umfasst das erfindungsgemäße Reinigungsmittel in bevorzugter Ausführung eine Säure, vorzugsweise ausgewählt aus Essigsäure, Milchsäure, Apfelsäure, Zitronensäure und Mischungen davon. Bevorzugt wird eine Massenkonzentration zwischen 0,2% und 6% Säure, insbesondere zwischen 2% und 5% Säure, im Reinigungsmittel. Weitere geeignete Säuren und bevorzugte Konzentrationen davon sind beispielsweise in der WO 2010/130541 A1 genannt, im Abschnitt "Säuren".

Zweckmäßigerweise ist das erfindungsgemäße Reinigungsmittel mindestens einen Monat, bevorzugt mindestens 3 Monate, mehr bevorzugt zumindest 6 Monate, noch mehr bevorzugt zumindest 12 Monate, insbesondere zumindest 18 Monate oder gar zumindest 24 Monate haltbar. Vorzugsweise bedeutet "haltbar", dass nach dem überprüften Zeitraum (z.B. nach 1, 3, 6, 12, 18 oder 24 Monaten bei üblichen Umgebungstemperaturen, z.B. 15°C-25°C) die Anzahl der KBE der Milchsäurebakterien noch zumindest 1%, bevorzugt zumindest 5%, mehr bevorzugt zumindest 10%, noch mehr bevorzugt zumindest 25%, insbesondere zumindest 50% oder gar zumindest 75% oder zumindest 90% der ursprünglichen Milchsäurebakterien-KBE-Anzahl beträgt.

In einer weiteren bevorzugten Ausführungsform umfasst das erfindungsgemäße Reinigungsmittel ferner einen Duftstoff. Solche Duftstoffe erhöhen die Akzeptanz beim Verbraucher und verbessern das Raumklima. Geeignete Duftstoffe ("Parfüms") und bevorzugte Konzentrationen davon sind beispielsweise in der WO 2010/130541 A1 beschrieben. Vorzugsweise ist der Duftstoff ein ätherisches Öl, insbesondere ausgewählt aus Pineöl, Citrusöl, Limettenöl, Jasminöl, Rosenöl, Muskateller-Salbeiöl, Kamillenöl, Lavendelöl, Nelkeöl, Melissenöl, Minzöl, Zimtblätteröl, Lindenblütenöl, Wacholderbeeröl, Vetiveröl, Olibanumöl, Galbanumöl und Labdanumöl Orangenblütenöl, Neroliol, Orangenschalenöl, Sandelholzöl, Angelikawurzelöl, Anisöl, Arnikablütenöl, Basilikumöl, Bayöl, Champacablütenöl, Edeltannenöl, Edeltannenzapfenöl, Elemiöl, Eukalyptusöl, Fenchelöl, Fichtennadelöl, Galbanumöl, Geraniumöl, Gingergrasöl, Guajakholzöl, Gurjunbalsamöl, Helichrysumöl, Ho-Öl, Ingweröl, Irisöl, Kajeputöl, Kalmusöl, Kamillenöl, Kampferöl, Kanagaöl, Kardamomenöl, Kassiaöl, Kiefernnadelöl, Kopaïvabalsamöl, Korianderöl, Krauseminzeöl, Kümmelöl, Kuminöl, Lemongrasöl, Moschuskörneröl, Myrrhenöl, Nelkenöl, Neroliöl, Niaouliöl, Olibanumöl, Origanumöl, Palmarosaöl, Patschuliöl, Perubalsamöl, Petitgrainöl, Pfefferöl, Pfefferminzöl, Pimentöl, Pine-Öl, Rosenöl, Rosmarinöl, Sandelholzöl, Sellerieöl, Sternanisöl, Thujaöl, Thymianöl, Verbenaöl, Vetiveröl, Wacholderbeeröl, Wermutöl, Wintergrünöl, Ylang-Ylang-Öl, Ysop-Öl, Zimtöl, Zimtblätteröl und Zypressenöl oder Mischungen davon. Es hat sich zusätzlich herausgestellt, dass Duftstoffe wie Citrusöl, Limettenöl oder Orangenschalenöl die Reinigungsleistung steigern.

Vorzugsweise beträgt die Konzentration (w/v) der Duftstoffe zwischen 0,001%-2%; wenn das Reinigungsmittel als flüssiges Konzentrat erfindungsgemäß vorliegt, sind 0,1%-2% bevorzugt; wenn das Reinigungsmittel als flüssige Verdünnung erfindungsgemäß bereitgestellt ist, sind 0,001%-0,2% bevorzugt.

In einer weiteren bevorzugten Ausführungsform umfasst das erfindungsgemäße Reinigungsmittel der vorliegenden Erfindung lebensfähige Zuckerhefezellen (*Saccharomyces*), insbesondere Bäckerhefezellen (*Saccharomyces cerevisiae*). Dies erhöht die Wirksamkeit des Reinigungsmittels, insbesondere die des Hemmens von unerwünschten Mikroorganismen. Insbesondere kommt es zwischen den Zuckerhefezellen und den gemäß der vorliegenden Erfindung vorhandenen Saponinen zu einer synergistischen Wechselwirkung, die sich positiv auf die positiven Wirkungen des erfindungsgemä-βen Reinigungsmittels, insbesondere die erwähnte probiotische Wirkung, auswirken. Das erfindungsgemäße Reinigungsmittel enthält an Zuckerhefezellen bevorzugt mindestens 10² KBE (KBE) pro Milliliter des Reinigungsmittels, mehr bevorzugt mindestens 10³ KBE/ml, noch mehr bevorzugt mindestens 10⁴ KBE/ml, insbesondere mindestens 10⁵ KBE/ml. Beispielsweise enthält das Reinigungsmittel 200-1000 KBE/ml an Zuckerhefezellen, insbesondere Bäckerhefezellen.

In einer weiteren, höchst bevorzugten Ausführungsform umfasst das Reinigungsmittel der vorliegenden Erfindung ferner lebensfähige cellulolytische Bakterien, bevorzugt gewonnen aus verrottendem bzw. teilweise verrottetem Laub ("Laubkompost"), mehr bevorzugt halb verrottetem Mischlaub, insbesondere aus möglichst naturbelassenen Wäldern oder biologischer Landwirtschaft. Vorteilhafterweise werden diese cellulolytischen Bakterien gemeinsam mit mindestens einem Saponin, bevorzugt mit saponin-haltigen Pflanzenbestandteilen wie hierin beschrieben, fermentiert und das Fermentationsprodukt wird dem erfindungsgemäßen Reinigungsmittel oder zur Herstellung des erfindungsgemäßen Reinigungsmittels beigefügt. Insbesondere verbessert dies die Wirksamkeit des Reinigungsmittels höchst überraschend in Anwendungsbereichen der Reinigung bzw. der Pflanzenstärkung. Das erfindungsgemäße Reinigungsmittel enthält an cellulolytischen Bakterien bevorzugt mindestens 10² KBE (KBE) pro Milliliter des Reinigungsmittels, mehr bevorzugt mindestens 10³ KBE/ml, noch mehr bevorzugt mindestens 10⁴ KBE/ml, insbesondere mindestens 10⁵ KBE/ml. Bevorzugt sind die cellulolytischen Bakterien ausgewählt aus der Abteilung Firmicutes, insbesondere den Familien Paenibacillaceae und Bacillaceae, wobei die Gattungen *Bacillus* (z.B. *Bacillus subtilis* oder *Bacillus licheniformis*), *Brevibacillus* und/oder *Paenibacillus* besonders bevorzugt sind. Fäkalbakterien der Familie der Enterobacteriaceae (die zu den unerwünschten Mikroorganismen gehören, wie oben beschrieben) sind keine cellulolytischen Bakterien im Sinne dieser Ausführungsform.

In einer weiteren bevorzugten Ausführungsform enthält das erfindungsgemäße Reinigungsmittel lebensfähige phototrophe Mikroorganismen, z.B. Mikroalgen oder phototrophe Bakterien. Dies kann die Wirksamkeit des Reinigungsmittels weiter erhöhen. Das erfindungsgemäße Reinigungsmittel enthält an phototrophen Mikroorganismen bevorzugt mindestens 10² KBE (KBE) pro Milliliter des Reinigungsmittels, mehr bevorzugt mindestens 10³ KBE/ml, noch mehr bevorzugt mindestens 10⁴ KBE/ml, insbesondere mindestens 10⁵ KBE/ml.

In einer weiteren bevorzugten Ausführungsform der vorliegenden Erfindung ist das erfindungsgemäße Reinigungsmittel filtriert. Vorzugsweise ist das Reinigungsmittel dadurch gekennzeichnet, dass höchstens X% der im Reinigungsmittel enthaltenen Festpartikel mit einem mittleren Durchmesser von zumindest 50µm einen mittleren Durchmesser von mehr als Y mm aufweisen, wobei X=20, bevorzugt X=10, mehr bevorzugt X=5, noch mehr bevorzugt X=1, insbesondere X=0,1 und Y=2, bevorzugt Y=1, mehr bevorzugt Y=0,5, noch mehr bevorzugt Y=0,1, insbesondere Y=0,05.

Je nach Rezeptur und Konzentration der Inhaltsstoffe kann das erfindungsgemäße Reinigungsmittel bei erfolgter Filtration z.B. klar oder trüb, z.B. trüb wie naturtrüber Birnensaft sein.

In einer weiteren bevorzugten Ausführungsform des erfindungsgemäßen Reinigungsmittels machen Aescine mindestens 25%, bevorzugt mindestens 50%, mehr bevorzugt mindestens 75%, insbesondere 95% der Masse der beinhalteten Saponine aus. Aescine sind z.B. in Kastanien enthalten.

Eine besonders bevorzugte Ausführungsform der vorliegenden Erfindung stellt das erfindungsgemäße Reinigungsmittel zur Verfügung, dass dadurch gekennzeichnet ist, dass die Konzentration an Milchsäurebakterien zwischen 10⁵ KBE/ml und 5×10⁶ KBE/ml ist, die Massenkonzentration aller Saponine im Reinigungsmittel mindestens 0,1% und höchstens 5% (bevorzugt höchstens 2,5%) ist, und dass das Reinigungsmittel ferner lebensfähige Zuckerhefezellen und einen Duftstoff umfasst und einen pH unter 3,5 aufweist. Insbesondere machen in diesem Reinigungsmittel Aescine mindestens 25%, bevorzugt mindestens 50%, mehr bevorzugt mindestens 75%, insbesondere 95% der Masse der beinhalteten Saponine aus. Die Milchsäurebakterien sind nach einer gegebenenfalls durchgeführten Filtration im erfindungsgemäßen Mittel vorhanden.

In einem weiteren Aspekt der vorliegenden Erfindung wird ein Behältnis (z.B. eine Flasche oder ein Kanister), der das erfindungsgemäße Reinigungsmittel beinhaltet, bereitgestellt. Vorzugsweise hat dieses Behältnis ein Fassungsvermögen von 1ml - 1000L, bevorzugt von 100ml - 100L, mehr bevorzugt von 500ml-10L. Dieses Behältnis kann beispielsweise aus Kunststoff bestehen.

In einem weiteren Aspekt der vorliegenden Erfindung wird ein Präparat, herstellbar durch teilweise oder vollständige Trocknung des erfindungsgemäßen Reinigungsmittels, bereitgestellt. Dadurch kann eine noch längere Haltbarkeit erreicht werden. Allerdings ist zu beachten, dass die Trocknung so schonend geschieht, dass zumindest 0,01%, vorzugsweise mindestens 0,1%, besser zumindest 1%, noch besser zumindest 10% oder gar zumindest 25% der Milchsäurebakterien im Reinigungsmittel lebensfähig bleiben. Beispielsweise kann dies durch Gefriertrocknung erreicht werden.

Zweckmäßigerweise ist dieses Präparat mindestens 3 Monate, bevorzugt mindestens 6 Monate, mehr bevorzugt zumindest 12 Monate, noch mehr bevorzugt zumindest 24 Monate, insbesondere zumindest 36 Monate oder gar zumindest 48 Monate haltbar. Vorzugsweise bedeutet "haltbar", dass nach dem überprüften Zeitraum (z.B. nach 1, 3, 6, 12, 18 oder 24 Monaten bei üblichen Umgebungstemperaturen, z.B. 15°C-25°C) die Anzahl der KBE der Milchsäurebakterien noch zumindest 1%, bevorzugt zumindest 5%, mehr bevorzugt zumindest 10%, noch mehr bevorzugt zumindest 25%, insbesondere zumindest 50% oder gar zumindest 75% oder zumindest 90% der ursprünglichen Milchsäurebakterien-KBE-Anzahl beträgt.

In einem weiteren Aspekt der vorliegenden Erfindung wird dieses Präparat, vorzugsweise gemahlen, als Boden- bzw. Pflanzenhilfsstoff eingesetzt.

Offenbart wird die Verwendung des erfindungsgemäßen Reinigungsmittels, oder einer Verdünnung davon (z.B. wenn das Reinigungsmittel als Konzentrat vorliegt), oder des erfindungsgemä-βen Präparats.

Insbesondere ist das Reinigungsmittel der vorliegenden Erfindung oder eine Verdünnung davon oder das durch teilweise oder vollständige Trocknung des erfindungsgemäßen Reinigungsmittels hergestellte Präparat geeignet für die Reinigung von harten Oberflächen in Haushalt, Industrie oder Gewerbe, deshalb umfasst eine bevorzugte Ausführungsform der erfindungsgemäßen Verwendung die Anwendung des Reinigungsmittels auf einer harten Oberfläche, zur Behandlung, insbesondere Reinigung, der Oberfläche. Solche Oberflächen bestehen z.B. Glas, Keramik, Metall oder Kunststoff.

Ebenso betrifft die Erfindung ein Verfahren zur Reinigung von Oberflächen, umfassend das Aufbringen des erfindungsgemäßen Reinigungsmittels oder einer Verdünnung davon oder des durch teilweise oder vollständige Trocknung des erfindungsgemäßen Reinigungsmittels hergestellten Präparats auf der Oberfläche. Hierbei nimmt das aufgebrachte Mittel Schmutz auf, welcher hiermit entfernt wird und besiedelt gleichzeitig die Oberfläche mit den (gutartigen) Milchsäurebakterien.

Überraschenderweise hat sich herausgestellt, dass das erfindungsgemäße Reinigungsmittel oder eine Verdünnung davon oder das durch teilweise oder vollständige Trocknung des erfindungsgemäßen Reinigungsmittels hergestellte Präparat als Behandlungsmittel auch an einer Pflanze angewendet werden kann, zur Förderung des Wachstums oder der Widerstandskraft der Pflanze. Sowohl die Milchsäurebakterien als auch die Saponine (bzw. die Zuckerhefen, wenn vorhanden, und die Saponine) tragen synergistisch zu dieser Förderung bei. Daher betrifft eine weitere bevorzugte Ausführungsform der vorliegenden Erfindung die Anwendung des erfindungsgemäßen Reinigungsmittels oder einer Verdünnung davon oder des durch teilweise oder vollständige Trocknung des erfindungsgemäßen Reinigungsmittels hergestellten Präparats (als Behandlungsmittel) an einer Pflanze oder im Substrat (z.B. Erdboden oder Blumenerde) einer Pflanze, zur Förderung des Wachstums oder der Widerstandskraft der Pflanze; bzw. ein Verfahren, das die die Anwendung des erfindungsgemäßen Reinigungsmittels oder einer Verdünnung davon oder des durch teilweise oder vollständige Trocknung des erfindungsgemäßen Reinigungsmittels hergestellten Präparats (als Behandlungsmittel) an einer Pflanze oder im Substrat (z.B. Erdboden oder Blumenerde) einer Pflanze umfasst, zur Förderung des Wachstums oder der Widerstandskraft der Pflanze. Insbesondere wirkt das erfindungsgemäße Reinigungsmittel oder eine Verdünnung davon oder das durch teilweise oder vollständige Trocknung des erfindungsgemäßen Reinigungsmittels hergestellte Präparat gegen Befall mit Krankheitserregern wie Bakterien oder Pilzen. Diese Behandlung von Pflanzen kann unabhängig von der erfindungsgemäßen Verwendung (oder dem Verfahren) zur Reinigung von Oberflächen oder in Kombination mit dieser durchgeführt werden. Beispielsweise, indem nach der Reinigungsanwendung das (verbliebene oder verschmutzte) Reinigungsmittel (oder eine Verdünnung oder das durch teilweise oder vollständige Trocknung des erfindungsgemäßen Reinigungsmittels hergestellte Präparat davon) in das Substrat geleert wird.

Zwar offenbart die WO 88/00579 A1 ein Mittel zur Verbesserung und natürlichen Gesunderhaltung von Böden und Pflanzenwachstum auf Basis eines Milchsäurebakterien enthaltenden Gutes aus der Versäuerung von Brot in Wasser. Allerdings wird der Zusatz von Saponinen, der die positive Wirkung des erfindungsgemäßen Reingungsmittels überraschend verstärkt, in jenem Dokument nicht erwähnt oder nahegelegt.

Überraschenderweise hat sich auch gezeigt, dass das Reinigungsmittel der Erfindung geeignet ist, Gerüche in Abfluss (z.B. eines Waschbeckens) und Kanal (insbesondere in Haushalt oder Gewerbe) zu beseitigen oder Gerüchen vorzubeugen. Daher ist eine weitere bevorzugte Ausführungsform der vorliegenden Erfindung die Verwendung des erfindungsgemäßen Reinigungsmittels in Abfluss oder Kanal bzw. ein Verfahren, welches die Anwendung des erfindungsgemäßen Reinigungsmittels in Abfluss oder Kanal umfasst. Das kann unabhängig von der erfindungsgemäßen Verwendung (oder dem Verfahren) zur Reinigung von Oberflächen oder in Kombination mit dieser durchgeführt werden. Beispielsweise, indem nach der Reinigungsanwendung das (verbliebene) Reinigungsmittel (oder eine Verdünnung davon) in den Abfluss geleert wird. Vorzugsweise lässt man es dort länger einwirken, beispielsweise mindestens 3 Minuten, vorzugsweise mindestens 10 Minuten, insbesondere mindestens 60 Minuten. Die Besiedelung des Abflusses mit den erfindungsgemäßen Milchsäurebakterien führt zur Vermeidung von unangenehmen Gerüchen. Vorzugsweise erfolgt die Behandlung über Nacht, damit die Besiedelung möglichst ungestört erfolgen kann.

Des Weiteren hat sich überraschend herausgestellt, dass das erfindungsgemäße Reinigungsmittel für die Fellpflege von Tieren (z.B. Haus- und Nutztieren, wie z.B. Pferden, Hunden und Katzen) gut geeignet ist. Deshalb ist eine weitere bevorzugte Ausführungsform der vorliegenden Erfindung die Verwendung des erfindungsgemäßen Reinigungsmittels oder einer Verdünnung davon in der Fellpflege oder Fellreinigung bzw. ein Verfahren, welches die Fellpflege oder Fellreinigung mit dem erfindungsgemä-βen Reinigungsmittel oder einer Verdünnung davon umfasst.

Es hat sich überraschend gezeigt, dass Tiere (beispielsweise Pferde) auch davon profitieren, wenn sie das erfindungsgemäße Reinigungsmittel (als Nahrungsergänzungsmittel) oder eine Verdünnung davon über die Nahrung aufnehmen. Daher ist eine weitere bevorzugte Ausführungsform der vorliegenden Erfindung die Verwendung des erfindungsgemäßen Reinigungsmittels oder einer Verdünnung davon als Nahrungsergänzungsmittel für Tiere bzw. ein Verfahren, welches die Verabreichung des erfindungsgemäßen Reinigungsmittels oder einer Verdünnung davon als Nahrungsergänzungsmittel für Tiere umfasst.

In einem weiteren Aspekt der vorliegenden Erfindung wird ein Herstellungsverfahren für das erfindungsgemäße Reinigungsmittel offenbart, umfassend das Vorsehen eines Milchsäurebakterien umfassenden Präparats und die Zugabe von einem Saponin und gegebenenfalls Wasser zum Präparat. Das aktive Vermischen der Bestandteile, z.B. durch Rühren oder Schütteln, ist von Vorteil, um eine homogene Mischung zu erreichen. Der Fachmann kann aus den weiter oben genannten bevorzugte Konzentrationen der eben genannten Bestandteile vorteilhafte Zugabemengen errechnen. Gegebenenfalls kann mit Säure durch Zugabe oder durch Entstehung während der Fermentation (vorzugsweise den hierin genannten Säuren) der pH auf einen pH-Wert von unter 5, bevorzugt unter 4, mehr bevorzugt unter 3,5, insbesondere unter 3, gesenkt werden.

In einer weiteren bevorzugten Ausführungsform des Herstellungsverfahrens umfasst das Verfahren mindestens einen Filtrationsschritt, insbesondere nach der Fermentation. Vorzugsweise wird das Reinigungsmittel so filtriert, dass höchstens X% der im Reinigungsmittel enthaltenen Festpartikel mit einem mittleren Durchmesser von zumindest 50µm einen mittleren Durchmesser von mehr als Y mm aufweisen, wobei X=20, bevorzugt X=10, mehr bevorzugt X=5, noch mehr bevorzugt X=1, insbesondere X=0,1 und Y=2, bevorzugt Y=1, mehr bevorzugt Y=0,5, noch mehr bevorzugt Y=0,1, insbesondere Y=0,05. In einer weiteren bevorzugten Ausführungsform des Herstellungsverfahrens umfasst das Verfahren mindestens einen Filtrationsschritt durch einen Filter mit einer Porengröße von mindestens Spm und höchstens 1,5mm, bevorzugt höchstens 1mm, mehr bevorzugt höchstens 500pm, noch mehr bevorzugt höchstens 100pm, insbesondere höchstens 50µm.

Der Filtrationsschritt erfolgt beispielsweise mit Filterplatten für Wein und Spirituosen mit einer Porengröße von ca. 5-10µm bzw. mit Filterplatten für Fruchtsäfte mit einer Porengröße von ca. 10-30µm.

In einer besonders bevorzugten Ausführungsform des Herstellungsverfahrens ist das Milchsäurebakterien umfassende Präparat ein Gärschlamm, bevorzugt gewonnen aus der Spontanversäuerung von Sauerteigbrot. Gärschlämme umfassend Milchsäurebakterien sind dem Fachmann vertraut und außerhalb des Bereichs der vorliegenden Erfindung schon gut öffentlich dokumentiert. Gärschlämme beinhalten üblicherweise keine Reinkultur - durch die Kombination an vielen verschiedenen Milchsäurebakterienstämmen ergeben sich sehr vorteilhafte Wirkungen, vor allem in Bezug auf die Bekämpfung von unerwünschten Mikroorganismen. Beispielsweise können geeignete Gärschlämme durch Verfahren hergestellt werden, die in der DE 38 02 840 A1 oder in der DE 199 32 055 A1 gelehrt werden.

In einer weiteren, bevorzugten Ausführungsform wird zum Milchsäurebakterien umfassenden Präparat gekeimtes Getreide, bevorzugt ausgewählt aus Gerste (z.B. Braugerste) und Weizen (z.B. Brauweizen), zugegeben, vorzugsweise vor der Fermentation. Beispielsweise kann das Getreide vor der Zugabe 3-5 Tage in Wasser bei einer Temperatur von 15°C-18°C eingeweicht und so zur Keimung gebracht werden. Alternativ oder zusätzlich können, vorzugsweise nach einer Fermentation, einer oder mehrere der folgenden Pflanzenteile zum Milchsäurebakterien umfassenden Präparat zugegeben werden: Zitrusfrüchte (bevorzugt im Ganzen) und Kräuter bzw. Früchte wie Brennessel, Löwenzahn, Oregano, Basilikum, Hagebutte, Sanddorn. In beiden Fällen hat sich gezeigt, dass sich die Reinigungsleistung, vor allem in Bezug auf die Langzeitwirkung (Verhinderung von z.B. wetterbedingter Wiederverschmutzung von gereinigten Oberflächen) verbessert. Insbesondere zeigte sich länger anhaltender Glanz der Oberflächen nach der Reinigung.

Wie bereits erwähnt, ist ein niedriger pH des erfindungsgemä-βen Reinigungsmittels bevorzugt, um die Haltbarkeit zu erhöhen. Daher umfasst eine weitere Ausführungsform des Herstellungsverfahrens der vorliegenden Erfindung die Fermentation mit Milchsäurebakterien vor oder nach der Zugabe des Saponins, bevorzugt für mindestens zwei Tage, mehr bevorzugt für mindestens eine Woche, noch mehr bevorzugt für mindestens zwei Wochen, besonders bevorzugt für mindestens drei Wochen. Vorzugsweise wird die Fermentation durchgeführt bis ein pH Wert von unter 5, bevorzugt von unter 4, noch mehr bevorzugt von unter 3,5, besonders bevorzugt von unter 3 erreicht ist.

Besonders bevorzugt ist die Zugabe der Saponine vor der besagten Fermentation. Dadurch werden die vorteilhaften Wirkungen des Reinigungsmittels erhöht, insbesondere durch eine positive Wirkung auf die fermentierenden Milchsäurebakterien bzw. die gegebenenfalls vorhandenen Zuckerhefen.

Ein weiterer vorteilhafter Effekt der Zugabe der Saponine vor der besagten Fermentation ergibt sich insbesondere wenn die Saponine in Form von saponin-haltigen Pflanzenbestandteilen wie hierin beschrieben zugegeben werden. Da Saponine in Pflanzenbestandteilen üblicherweise gebunden vorkommen , bewirkt die Fermentation in Anwesenheit der Pflanzenbestandteile ein besseres Herauslösen der Saponine und fördert die Haltbarkeit. Außerdem kann so eine vorherige, energie- und kostenaufwendige Extraktion der Saponine entfallen.

In einer höchst bevorzugten Ausführungsform des erfindungsgemäßen Verfahrens erfolgt die Zugabe der Saponine dadurch, dass saponin-haltige Pflanzenbestandteile, insbesondere von Kastanie (bevorzugt die Früchte, inbesondere der Echten Rosskastanie), Efeu (bevorzugt die Blätter, insbesondere des Gemeinen Efeus), Waschnussbaum (bevorzugt die Früchte - "Waschnüsse"), Birke (bevorzugt die Blätter) oder Seifenkraut (bevorzugt das Rhizom, insbesondere des Echten Seifenkrauts), zum Milchsäurebakterien umfassenden Präparat zugegeben werden. Wie erwähnt, sind diese für ihren hohen Saponingehalt bekannt und deshalb hervorragend für die vorliegende Erfindung geeignet. Vorzugsweise werden die Pflanzenbestandteile vor Zugabe zerkleinert, insbesondere durch Mahlen in einem Mörser, gegebenenfalls unter Zugabe von ätherischen Ölen wie beispielsweise den oben genannten. Bevorzugte machen im so hergestellten Reinigungsmittel Saponine aus Kastanie und/oder Efeu mindestens 50%, bevorzugt mindestens 75%, mehr bevorzugt mindestens 90%, insbesondere 99% der Masse der beinhalteten Saponine aus.

Mit "Massenkonzentration" in Flüssigkeiten ist die Masse [kg] des gelösten Stoffes pro Volumen der Lösung [l] gemeint. Üblicherweise wird sie in Prozent angegeben und bezieht sich dann auf die Masse des gelösten Stoffes (in Gramm) pro 100ml Lösung.

Unter dem Begriff eines "lebensfähigen" Mikroorganismus ist zu verstehen, dass der Mikroorganismus bei zum Leben geeigneten Bedingungen (z.B. 25°C bei ausreichend Feuchtigkeit und Nährstoffen) Stoffwechsel durchführt und sich gegebenenfalls vermehrt. Ein solcher Mikroorganismus ist auch dann als lebensfähig zu betrachten, wenn er gerade keinen Stoffwechsel durchführt (möglicherweise im gefrorenen oder ausgetrockneten Zustand), sofern sich Stoffwechsel wieder einstellt, sobald zum Leben geeignete Umweltbedingungen herrschen. Für Milchsäurebakterien und Zuckerhefe sind diese Umweltbedingungen bekannt, insbesondere vermehren sie sich unter Optimalbedingungen wie einer Temperatur von 30°C und ausreichend Nährstoffen und Feuchtigkeit.

Unter dem Begriff "cellulolytisch" in Bezug auf ein Bakterium ist zu verstehen, dass das Bakterium Cellulose als Nährstoff verwenden kann. Insbesondere bedeutet "cellulolytisch", dass sich das Bakterium in einem cellulosebasierten Nährmedium (z.B. 1 g (NH₄)₂SO₄, 1 g K₂HPO₄, 0,5 g MgSO₄, 0,001 g NaCl, 15 g Agar, 10 g Carboxymethylcellulose (CMC) und 0,2 g Cycloheximid auf einen Liter destilliertes Wasser) in Kultur vermehren kann.

Die vorliegende Erfindung wird anhand der nachfolgenden Beispiele, auf die sie selbstverständlich nicht eingeschränkt ist, näher erläutert.

### Beispiele

### Beispiel 1 - Herstellung des Reinigungsmittels als Konzentrat

100g getrocknete Rosskastanien (von *Aesculus hippocastanum*) zerreiben oder zermahlen und mit 10ml eines ätherischen Öls vermengen. Dazu 890ml Original Kanne Brottrunk^{®} (ein Gärschlamm der Milchsäurebakterien beinhaltet) geben.

Bei einer Temperatur von 36°C 4 Wochen fermentieren und im Anschluss die Feststoffe mit einem feinen Sieb entfernen. Danach folgt eine Reife- und Absetzphase von weiteren 2-4 Wochen bei etwa 20°C. Das nachfolgende Filtrieren (Porengröße 30µm) und Abfüllen in einen Kanister schließt die Produktion des Reinigungsmittels ab.

### Beispiel 2 - Herstellung des Reinigungsmittels als Konzentrat

50g getrocknete Rosskastanien (von *Aesculus hippocastanum*) und 50g Efeu (Hedera helix) zerreiben oder zermahlen und mit 10ml eines ätherischen Öls vermengen. Dazu 30g Vollkorn-Dinkelmehl, 860ml lauwarmes Wasser, 5g Bio-Sauerteig getrocknet (der Milchsäurebakterien beinhaltet) und 5g Bio-Hefe geben.

Bei einer Temperatur von 36°C 4 Wochen fermentieren und im Anschluss die Feststoffe mit einem feinen Sieb entfernen. Danach folgt eine Reife- und Absetzphase von weiteren 2-4 Wochen bei etwa 20°C. Das nachfolgende Filtrieren (Porengröße 30µm) und Abfüllen in einen Kanister schließt die Produktion des Reinigungsmittels ab.

### Beispiel 3 - Anwendung

20ml des im Herstellungsbeispiel erhaltenen Konzentrats mit warmem Wasser auf 1000ml verdünnen und mit einem Wischmob auf einer steinernen Terrassenfläche so viel der Verdünnung aufbringen, dass die gesamte Terrassenfläche mit der Verdünnung benetzt ist. Drei Minuten einwirken lassen, danach die Terrasse mit Wasser abspülen. Mit der überschüssigen Verdünnung Pflanzen im Garten begießen und/oder die Blätter besprühen.

Die Terrassenfläche konnte effektiv gereinigt werden, wobei nachhaltig eine Besiedelung durch andere Organismen (Pilze, Flechten) vermieden wurde. Die behandelten Pflanzen zeigten im Vergleich zu unbehandelten Pflanzen stärkeres Wachstum und geringeren Pilzbefall. Besonders gute Ergebnisse brachte die oben genannte Verdünnung im Vergleich zu einen herkömmlichen Reinigungsmittel im Einsatz auf Holzböden. Hier wurden neben der schonenden Reinigung auch pflegende Effekte festgestellt die sich in Farbfrische und Glanz zeigten, insbesondere nach mehrmaligem Reinigen.

### Beispiel 4 - Anwendung

Der Einsatz der vorliegenden Erfindung als Pflanzenstärkungsmittel zeigte ausgeprägte Wirkungen auf Wachstum, Blattglanz und Blattfarbe. Weiters wurde bei Pflanzen nach mehrmaligem Besprühen über zwei Wochen ein "Lotosblüten-Effekt" beobachtet.

### Beispiel 5 - Vergleichstest

In einem Test wurden folgende Produkte bzw. Rezepturen verglichen:
A) Handelsüblicher Allzweckreiniger mit künstlichen Tensiden und Essigzusatz
B) Probiotischer Reiniger mit "Effektiven Mikroorganismen" und künstlichen Tensiden
C) Die Bestandteile (Brottrunk, Mischung aus Rosskastanie, Efeu und Seifenkraut, Duftöle) werden gemischt und nach kurzer Zeit verwendet - eine Ausführungsform des erfindungsgemäßen Reinigungsmittels
D) Die Bestandteile (Brottrunk, Mischung aus Rosskastanie, Efeu und Seifenkraut, Duftöle) werden gemischt und fermentiert wie in Beispiel 1 beschrieben - eine weitere Ausführungsform des erfindungsgemäßen Reinigungsmittels
E) Die Bestandteile (Brottrunk, Mischung aus Rosskastanie, Efeu und Seifenkraut, "Laubkompost", Duftöle) werden gemischt und fermentiert wie in Beispiel 1 beschrieben - eine weitere Ausführungsform des erfindungsgemäßen Reinigungsmittels.
F) Die Bestandteile (gekeimtes Getreide, Bio-Sauerteig, Bio-Hefe, Mischung aus Rosskastanie, Efeu und Seifenkraut, Wildkräuter und Wildfrüchte, Zitronen, Laubkompost, Duftöle) werden gemischt, fermentiert und verarbeitet wie im Beispiel 6 unten beschrieben - eine weitere Ausführungsform des erfindungsgemäßen Reinigungsmittels.

Der Vergleich erfolgte in folgenden Punkten:
- Produktstabilität / Haltbarkeit
- Reinigung von harten und weichen Oberflächen
- Autoreinigung (Außen, Innen, Glas, Felgen)
- Oberflächenpflege (Farbfrische, Glanz)
- Trocknungszeit
- Wiederverschmutzung
- Wirkung auf Pflanzen (Wachstum, Blattglanz u. - farbe)
- Tierhaltung in Landwirtschaft (Stallgeruch, Mist, Gülle)
- Tierpflege (Fellpflege, Fliegenbelastung)

Das Ergebnis unter den getesteten Produkten bzw. Rezepturen zeigt, dass die Rezepturen "E" und "F" insgesamt am wirkungsvollsten sind, wobei "F" zu besseren Resultaten als "E" führt, insbesondere im Bereich Tierhaltung (Stallgeruch usw.) und Tierpflege (Fellpflege, Fliegenbelastung). Ein Langzeittest mit der Dauer eines Jahres hat die oben genannten Ergebnisse bestätigt.

### Beispiel 6 - Herstellung des Reinigungsmittels

Es wird gereinigtes Getreide (Braugerste oder Brauweizen) in Wasser eingeweicht und bei einer Temperatur von 15-18 Grad C zur Keimung gebracht. Im Mehlkörper werden dadurch verstärkt Enzyme gebildet.

Es erfolgt die Fermentation, dazu werden folgende Komponenten verwendet:
- 50g getrocknete und gemahlene Rosskastanien
- 50g getrockneter und gemahlener Efeu, Seifenkraut, Birkenblätter oder Laubkompost
- 40g des frisch gekeimten Getreides
- 5g Bio-Sauerteig (beinhaltet Milchsäurebakterien)
- 5g Bio-Hefe
- 850ml unbehandeltes Wasser (ca. 30°C)

Bei einer Temperatur von 36°C 4 Wochen fermentieren und im Anschluss Feststoffe mit einem feinen Sieb entfernen (jedoch keinesfalls sterilfiltrieren). Der pH-Wert des Reinigungsmittels liegt nach der Fermentation bereits zwischen 2,5 und 3,0.

Zum Filtrat (Volumen: 840 ml) werden die folgenden Bestandteile zugegeben:
- 25g pürierte, antioxidativ hoch wirksame Früchte und Kräuter (Brennessel, Löwenzahn, Oregano, Basilikum, Hagebutte, Sanddorn, Zitronen etc)
- 25 g pürierte Zitronen
- 10ml Zitronenöl oder ein anderes ätherisches Öl

Bei einer Temperatur von 36° erfolgt die zweite Fermentation für 2 Wochen, im Anschluss werden die Feststoffe mit einem feinen Sieb entfernt (jedoch keinesfalls sterilfiltrieren). Der pH-Wert ist durch die zugegebenen Zitronen und die Nachfermentation weiter abgesunken.

Es folgt bei 20°C eine Reife- und Absetzphase für 2-4 Wochen. Bei Bedarf kann der pH-Wert durch Zugabe einer Säure (z.B. Zitronensäure) auf den Zielwert 2,5 eingestellt werden Abschließend wird nochmals filtriert (Porengröße des Filters: 30pm) und das Filtrat in einen Kanister abgefüllt.

## Patentansprüche

1. Reinigungsmittel, umfassend lebensfähige Milchsäurebakterien, mindestens ein Saponin und Wasser,
**dadurch gekennzeichnet, dass** die Massenkonzentration aller Saponine im Reinigungsmittel mindestens 0,01%, bevorzugt mindestens 0,5%, mehr bevorzugt mindestens 1%, noch mehr bevorzugt mindestens 1,5%, insbesondere mindestens 2% beträgt;
wobei das Reinigungsmittel an Milchsäurebakterien mindestens 1000 koloniebildene Einheiten (KBE) pro Milliliter enthält, und der pH-Wert des Reinigungsmittels unter 5 liegt.

2. Reinigungsmittel nach Anspruch 1, **dadurch gekennzeichnet, dass** der pH-Wert des Reinigungsmittels unter 4, bevorzugt unter 3,5, mehr bevorzugt unter 3, insbesondere unter 2,5 liegt.

3. Reinigungsmittel nach Anspruch 1 oder 2, ferner umfassend einen Duftstoff, vorzugsweise ein ätherisches Öl.

4. Reinigungsmittel nach einem der Ansprüche 1 bis 3, ferner umfassend lebensfähige Zuckerhefezellen (*Saccharomyces*), insbesondere Bäckerhefezellen (*Saccharomyces cerevisiae*), und/oder lebensfähige cellulolytische Bakterien und/oder lebensfähige phototrophe Mikroorganismen.

5. Reinigungsmittel nach einem der Ansprüche 1 bis 4, ferner umfassend eine Säure, vorzugsweise Zitronensäure.

6. Reinigungsmittel nach einem der Ansprüche 1 bis 5, **dadurch gekennzeichnet, dass** die Massenkonzentration aller Saponine im Reinigungsmittel mindestens 0,1% und höchstens 5% ist, und dass das Reinigungsmittel ferner lebensfähige Zuckerhefezellen und einen Duftstoff umfasst und einen pH unter 3,5 aufweist, und dass Aescine mindestens 25% der Masse der Saponine im Reinigungsmittel ausmachen.

7. Präparat, herstellbar durch Trocknung des Reinigungsmittels nach einem der Ansprüche 1 bis 6.

8. Verwendung des Reinigungsmittels nach einem der Ansprüche 1 bis 6, oder einer Verdünnung davon, oder des Präparats davon nach Anspruch 7 auf einer harten Oberfläche, zur Behandlung, insbesondere Reinigung, der Oberfläche.

9. Verwendung des Reinigungsmittels nach einem der Ansprüche 1 bis 6, oder einer Verdünnung davon, oder des Präparats davon nach Anspruch 7 an einer Pflanze oder im Substrat einer Pflanze, zur Förderung des Wachstums oder der Widerstandskraft der Pflanze.

10. Verfahren zur Herstellung des Reinigungsmittels nach einem der Ansprüche 1 bis 6, umfassend das Vorsehen eines Milchsäurebakterien umfassenden Präparats und die Zugabe von einem Saponin und gegebenenfalls Wasser zum Präparat.

11. Verfahren nach Anspruch 10, wobei das Milchsäurebakterien umfassende Präparat ein Gärschlamm, bevorzugt gewonnen aus der Spontanversäuerung von Sauerteigbrot, ist.

12. Verfahren nach Anspruch 10 oder 11, ferner umfassend die Fermentation mit Milchsäurebakterien vor oder nach der Zugabe des Saponins, bevorzugt für mindestens zwei Tage, mehr bevorzugt für mindestens eine Woche, noch mehr bevorzugt für mindestens zwei Wochen, besonders bevorzugt für mindestens drei Wochen;
wobei vorzugsweise die besagte Fermentation nach der Zugabe des Saponins durchgeführt wird.

13. Verfahren nach Anspruch 12, wobei die Fermentation durchgeführt wird bis ein pH Wert von unter 5, bevorzugt von unter 4, besonders bevorzugt von unter 3 erreicht ist.

14. Verfahren nach einem der Ansprüche 10 bis 13, wobei die Zugabe des Saponins dadurch erfolgt, dass saponin-haltige Pflanzenbestandteile, insbesondere von Kastanie, Efeu, Birke, Waschnussbaum, oder Seifenkraut, oder Mischungen hiervon, zum Milchsäurebakterien umfassenden Präparat zugegeben werden.

## Claims

1. Cleaning agent comprising viable lactic acid bacteria, at least one saponin and water, **characterised in that** the mass concentration of all saponins in the cleaning agent is at least 0.01%, preferably at least 0.5%, more preferably at least 1%, even more preferably at least 1.5%, in particular at least 2%;
the cleaning agent containing at least 1000 colony-forming units (CFU) per millilitre of lactic acid bacteria and the pH of the cleaning agent being below 5.

2. Cleaning agent according to claim 1, **characterised in that** the pH of the cleaning agent is below 4, preferably below 3.5, more preferably below 3, in particular below 2.5.

3. Cleaning agent according to either claim 1 or claim 2, further comprising a fragrance, preferably an essential oil.

4. Cleaning agent according to any of claims 1 to 3, further comprising viable *Saccharomyces* cells, in particular *Saccharomyces cerevisiae* cells and/or viable cellulolytic bacteria and/or viable phototrophic microorganisms.

5. Cleaning agent according to any of claims 1 to 4, further comprising an acid, preferably citric acid.

6. Cleaning agent according to any of claims 1 to 5 **characterised in that** the mass concentration of all saponins in the cleaning agent is at least 0.1% and at most 5%, and **in that** the cleaning agent further comprises viable *Saccharomyces* cells and a fragrance and has a pH below 3.5, and **in that** aescins constitute at least 25% of the mass of the saponins in the cleaning agent.

7. Preparation producible by drying the cleaning agent according to any of claims 1 to 6.

8. Use of the cleaning agent according to any of claims 1 to 6, or dilution thereof, or preparation thereof according to claim 7 on a hard surface for treating, in particular cleaning, the surface.

9. Use of the cleaning agent according to any of claims 1 to 6, or dilution thereof, or preparation thereof according to claim 7 on a plant or in the substrate of a plant, for promoting growth or resistance of the plant.

10. Method for producing the cleaning agent according to any of claims 1 to 6, comprising providing a preparation comprising lactic acid bacteria and adding a saponin and optionally water to the preparation.

11. Method according to claim 10, wherein the preparation comprising lactic acid bacteria is a fermentation sludge, preferably obtained from spontaneously acidifying sourdough bread.

12. Method according to either claim 10 or claim 11, further comprising carrying out fermentation with lactic acid bacteria before or after the saponin is added, preferably for at least two days, more preferably for at least one week, even more preferably for at least two weeks, particularly preferably for at least three weeks;
wherein preferably said fermentation is carried out after the saponin is added.

13. Method according to claim 12, wherein the fermentation is carried out until a pH below 5, preferably below 4, particularly preferably below 3 is reached.

14. Method according to any of claims 10 to 13, wherein the saponin is added in such a way that saponin-containing plant constituents, in particular of chestnut, ivy, birch, Western soapberry, or soapwort, or mixtures thereof, are added to the preparation comprising lactic acid bacteria.

## Revendications

1. Agent de nettoyage comprenant des bactéries lactiques viables, au moins une saponine et de l'eau,
**caractérisé en ce que** la concentration massique de toutes les saponines dans l'agent de nettoyage est d'au moins 0,01 %, de préférence d'au moins 0,5 %, de préférence encore d'au moins 1 %, de préférence encore d'au moins 1,5 %, en particulier d'au moins 2 %;
où l'agent de nettoyage contient en bactéries lactiques au moins 1000 unités formant des colonies (UFC) par millilitre, et le pH de l'agent de nettoyage est inférieur à 5.

2. Agent de nettoyage selon la revendication 1, **caractérisé en ce que** le pH de l'agent de nettoyage est inférieur à 4, de préférence inférieur à 3,5, de préférence encore inférieur à 3, en particulier inférieur à 2,5.

3. agent de nettoyage selon la revendication 1 ou 2, comprenant en outre un parfum, de préférence une huile essentielle.

4. Agent de nettoyage selon l'une des revendications 1 à 3, comprenant en outre des cellules de levure sucrière (*Saccharomyces*) viables, en particulier des cellules de levure de boulanger (*Saccharomyces cerevisiae*), et/ou des bactéries cellulolytiques viables et/ou des micro-organismes phototrophes viables.

5. Agent de nettoyage selon l'une des revendications 1 à 4, comprenant en outre un acide, de préférence l'acide citrique.

6. Agent de nettoyage selon l'une des revendications 1 à 5, **caractérisé en ce que** la concentration massique de toutes les saponines dans l'agent de nettoyage est d'au moins 0,1 % et d'au plus 5 %, et **en ce que** l'agent de nettoyage comprend en outre des cellules de levure sucrière viables et un parfum et présente un pH inférieur à 3,5, et **en ce que** les aescines représentent au moins 25 % de la masse des saponines dans l'agent de nettoyage.

7. Préparation pouvant être produite par séchage de l'agent de nettoyage selon l'une des revendications 1 à 6.

8. Utilisation de l'agent de nettoyage selon l'une des revendications 1 à 6, ou d'une dilution de celui-ci, ou de la préparation de celui-ci selon la revendication 7 sur une surface dure, pour le traitement, en particulier le nettoyage, de la surface.

9. Utilisation de l'agent de nettoyage selon l'une des revendications 1 à 6, ou d'une dilution de celui-ci, ou de la préparation de celui-ci selon la revendication 7 sur une plante ou dans le substrat d'une plante, pour favoriser la croissance ou la résistance de la plante.

10. Procédé de production de l'agent de nettoyage selon l'une des revendications 1 à 6, comprenant la fourniture d'une préparation comprenant des bactéries lactiques et l'addition d'une saponine et éventuellement d'eau à la préparation.

11. Procédé selon la revendication 10, où la préparation comprenant des bactéries lactiques est une pâte de fermentation, de préférence obtenue à partir de l'acidification spontanée de pain au levain.

12. Procédé selon la revendication 10 ou 11, comprenant en outre la fermentation avec des bactéries lactiques avant ou après l'addition de la saponine, de préférence pendant au moins deux jours, de préférence encore pendant au moins une semaine, de préférence encore pendant au moins deux semaines, de manière particulièrement préférée pendant au moins trois semaines;
où de préférence ladite fermentation est réalisée après l'addition de la saponine.

13. Procédé selon la revendication 12, où la fermentation est réalisée jusqu'à ce qu'un pH inférieur à 5, de préférence inférieur à 4, de manière particulièrement préférée inférieur à 3 soit atteint.

14. Procédé selon l'une des revendications 10 à 13, où l'addition de la saponine a lieu par le fait que des constituants de plantes contenant de la saponine, en particulier de châtaignier, de lierre, de bouleau, d'arbre à savon d'Inde, ou de saponaire, ou des mélanges de ceux-ci, sont ajoutés à la préparation comprenant des bactéries lactiques.
